# FASCICULE DE BREVET EUROPEEN

(11) **EP 4 229 656 B1**
(45) Date de publication et mention de la délivrance du brevet: **22.07.2026**
(21) Numéro de dépôt: 21790202.2
(22) Date de dépôt: 11.10.2021
(51) Int. Cl.: G21C 3/07, G21C 3/10, G21C 21/02, B23K 11/00, B23K 11/093, B23K 11/16, B23K 11/18, C23C 30/00, C23C 28/02, F16L 57/06, B23K 101/12, B23K 101/34, B23K 103/08, B23K 103/18

(54) **CRAYON DE COMBUSTIBLE NUCLÉAIRE ET PROCÉDÉ DE FABRICATION**
KERNBRENNSTAB UND HERSTELLUNGSVERFAHREN
NUCLEAR FUEL ROD AND MANUFACTURING METHOD

(30) Priorité: 13.10.2020 FR 2010437
(43) Date de publication de la demande: 23.08.2023
(73) Titulaire: Framatome, 92400 Courbevoie (FR)
(72) Inventeur: BISCHOFF, Jérémy, 69003 Lyon (FR); DUTHOO, Dominique, 26100 Romans-sur-Isère (FR)
(74) Mandataire: Lavoix
(86) Numéro de dépôt international: PCT/EP2021/078038
(87) Numéro de publication internationale: WO 2022/078951

(56) Documents cités:
- EP-A1- 0 524 332
- EP-A1- 0 845 146
- US-A- 5 401 933
- US-A1- 2017 330 638
- US-A1- 2019 139 654

## Description

La présente invention concerne le domaine des crayons de combustible nucléaire, en particulier pour réacteur à eau légère.

Les assemblages de combustible nucléaire utilisés dans les réacteurs à eau légère comprennent généralement un faisceau de crayons de combustible nucléaire, chaque crayon de combustible nucléaire comprenant une gaine contenant du combustible nucléaire, la gaine étant formée d'un tube fermé à chacune de ses deux extrémités par un bouchon.

Chaque bouchon est par exemple soudé à l'extrémité correspondante du tube pour fermer le tube de manière étanche. Pour la fixation de chaque bouchon sur le tube, il est possible d'utiliser différentes techniques de soudage, par exemple le soudage TIG (soudage à l'arc sous atmosphère inerte avec électrode de tungstène), le soudage laser ou le soudage par faisceau d'électrons.

Le tube et les bouchons sont généralement métalliques. Ils sont par exemple réalisés en zirconium ou en alliage de zirconium, par exemple un alliage de zirconium de type Zircaloy.

Afin de protéger la gaine de l'environnement particulièrement agressif dans lequel il se situe en cours de fonctionnement du réacteur nucléaire, il est possible de munir le tube d'un revêtement externe de protection, par exemple un revêtement de protection réalisé en chrome ou en alliage de chrome.

La présence d'un revêtement de protection sur le tube est susceptible d'affecter négativement une soudure réalisée entre le tube et un bouchon. La soudure qui en résulte peut s'en trouver fragilisée et/ou sensible à la corrosion.

Afin de limiter ce risque, le revêtement de protection est déposé sur la majorité de la longueur du tube, sans revêtir les portions d'extrémité du tube sur lesquelles sont soudés les bouchons. Ainsi, le revêtement de protection ne pollue par la soudure réalisée entre le tube et chaque bouchon.

Cependant, les portions du tube non recouvertes d'un revêtement de protection constituent des zones de faiblesse du tube et du crayon, car elles peuvent être plus sensibles à l'usure par fortement ou à la corrosion, y compris l'oxydation à haute température en régime accidentel.

US2019/139654A1 divulgue un crayon de combustible nucléaire contenant des pastilles de combustible nucléaire contenues dans une gaine comprenant un tube muni d'un revêtement recouvrant le tube, le tube étant fermé par des bouchons.

US5401933A divulgue une méthode de soudage d'un bouchon d'extrémité à une extrémité d'un tube de crayon de commande, le bouchon d'extrémité et le tube étant revêtus.

Un des buts de l'invention est de proposer un crayon de combustible nucléaire qui soit facile à fabriquer tout en étant résistant, notamment à la corrosion et l'oxydation à haute température.

A cet effet, l'invention propose un crayon de combustible nucléaire selon la revendication 1.

Des caractéristiques optionnelles du crayon de combustible nucléaire sont définies aux revendications 2 à 6.

L'invention concerne également un procédé de fabrication d'un crayon de combustible nucléaire selon la revendication 7.

Des caractéristiques optionnelles du procédé de fabrication sont définies aux revendications 8 à 13.

L'invention et ses avantages seront mieux compris à la lecture de la description qui va suivre, donnée uniquement à titre d'exemple non limitatif, et faite en référence aux dessins annexés, sur lesquels :
- la Figure 1 est une vue schématique en coupe longitudinale d'un crayon de combustible nucléaire ; et
- les Figures 2 et 3 sont des vues en coupe illustrant un procédé de fabrication d'un crayon de combustible nucléaire tel que celui de la Figure 1.

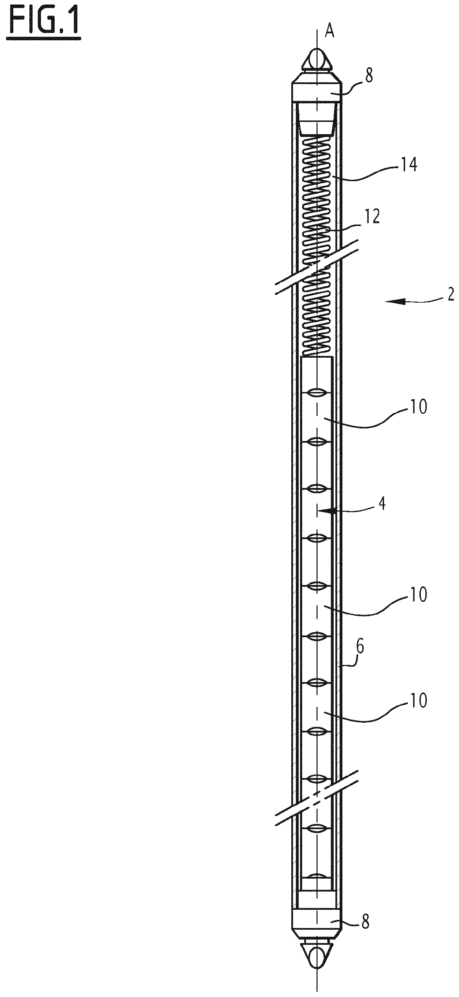

La Figure 1 illustre un crayon de combustible nucléaire 2 destiné par exemple à être utilisé dans un réacteur à eau légère, en particulier un réacteur à eau sous pression (ou PWR pour « Pressurized Water Reactor ») ou un réacteur à eau bouillante (ou BWR pour « Boiling Water Reactor »), un réacteur de type « VVER », un réacteur de type « RBMK », ou un réacteur à eau lourde, par exemple de type « CANDU ».

Le crayon de combustible nucléaire 2 présente la forme d'une tige allongée suivant un axe central A.

Le crayon de combustible nucléaire 2 comprend une gaine 4 contenant du combustible nucléaire.

La gaine 4 comprend un tube 6 et deux bouchons 8, chaque bouchon 8 étant soudé à une extrémité respective du tube 6 pour fermer cette extrémité de manière étanche. Le tube 6 s'étend suivant l'axe central A du crayon de combustible nucléaire 2. Le tube 6 présente de préférence une section transversale circulaire centrée sur l'axe central A.

Le combustible nucléaire se présente par exemple sous la forme d'un empilement de pastilles 10 empilées axialement à l'intérieur du tube 6, chaque pastille 10 contenant du matériau fissile. L'empilement de pastilles 10 est aussi appelée « colonne fissile ».

Le crayon de combustible nucléaire 2 comprend en option un ressort 12 disposé à l'intérieur du tube 6, entre l'empilement de pastilles 10 et l'un des bouchons 8, pour pousser l'empilement de pastilles 10 vers l'autre bouchon 8. Le ressort 12 est comprimé entre l'empilement de pastilles 10 et le bouchon 8.

Un volume ou plenum 14 est ménagé entre l'empilement de pastilles 10 et le bouchon 8 sur lequel le ressort 12 prend appui. Ce plenum 14 permet le stockage de gaz s'échappant du combustible nucléaire au cours du fonctionnement du réacteur. Le ressort 12 est situé dans le plenum 14.

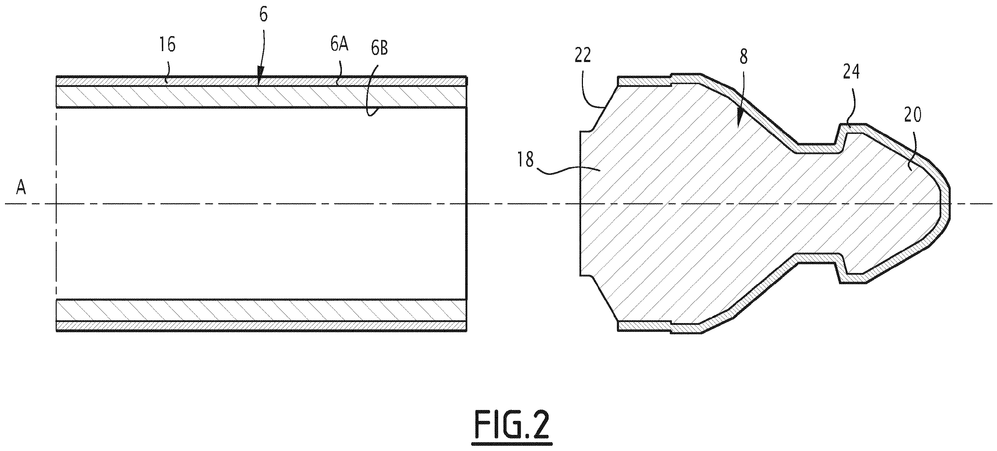

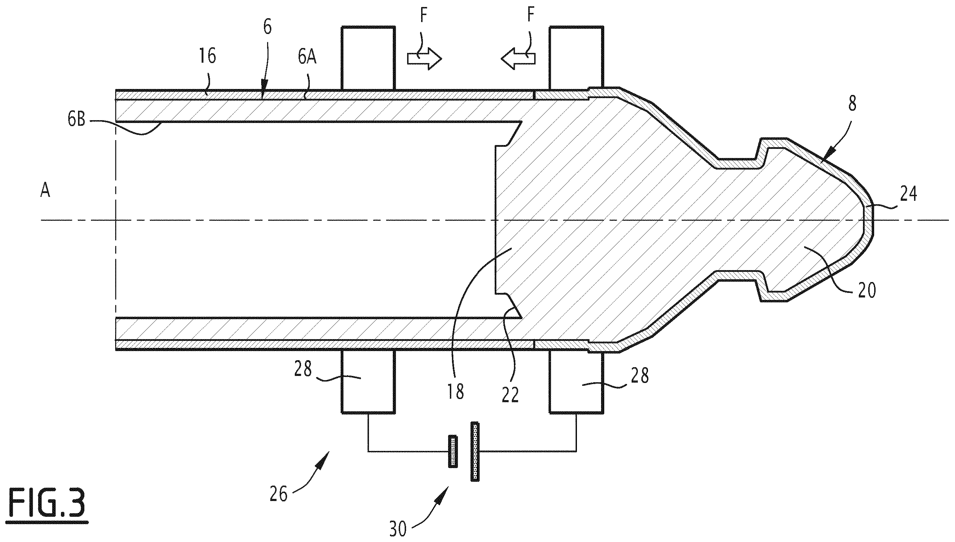

Comme illustré sur les Figures 2 et 3 qui illustrent le soudage d'un bouchon 8 à une extrémité du tube 6, le tube 6 est muni d'un revêtement de tube 16.

Le tube 6 possède une surface interne 6B, tournée vers l'intérieur du tube 6, et une surface externe 6A tournée vers l'extérieur tube 6.

Le revêtement de tube 16 recouvre la surface externe 6A du tube 6 pour le protéger de l'environnement extérieur. En fonctionnement, le revêtement de tube 16 est en contact avec l'environnement.

Le tube 6 est par exemple réalisé dans un matériau à base de zirconium.

Dans le contexte présent, un matériau à base de zirconium désigne un matériau en zirconium pur ou un alliage à base de zirconium. Un matériau en zirconium pur est un matériau comprenant au moins 99% en poids de zirconium.

Un alliage à base de zirconium est un alliage comprenant au moins 95% en poids de zirconium.

Dans un exemple de réalisation, le matériau à base de zirconium du tube 6 est un alliage quaternaire de zirconium dont la composition comprend, en poids, de 0,8 à 1,8% de niobium, de 0,2 à 0,6% d'étain et de 0,02 à 0,4% de fer, le reste étant constitué de zirconium et des inévitables impuretés
Le tube 6 présente par exemple une épaisseur comprise entre 0,4 mm et 1 mm. L'épaisseur du tube 6 est la distance entre la surface interne 6B et la surface externe 6A du tube 6.

Le revêtement de tube 16 est mince et présente par exemple une épaisseur strictement inférieure à celle du tube 6.

Le revêtement de tube 16 présente par exemple une épaisseur comprise entre 5 µm et 25 µm, en particulier entre 10 µm et 20 µm. L'épaisseur du revêtement de tube 16 est prise perpendiculairement à la surface externe 6A du tube 6, i.e. radialement par rapport à l'axe central A du tube 6.

Le revêtement de tube 16 est réalisé dans un matériau à base de chrome.

Dans le contexte présent, un matériau à base de chrome désigne un matériau en chrome pur ou un alliage à base de chrome.

Un matériau en chrome pur est un matériau comprenant au moins 99% en poids de chrome. Un alliage à base de chrome est un alliage comprenant au moins 85% en poids de chrome.

Dans un exemple de réalisation, le matériau à base de chrome est un alliage à base de chrome choisi parmi : un alliage binaire chrome-aluminium, un alliage binaire chrome-azote et un alliage binaire chrome-titane.

Le revêtement de tube 16 comprend une seule couche réalisée en matériau à base de chrome ou plusieurs couches superposées réalisées en matériau à base de chrome, de préférence avec le même matériau à base de chrome.

La structure du revêtement de tube 16 en plusieurs couches superposées résulte par exemple du procédé de dépôt utilisé pour déposer le revêtement de tube 16 sur le tube 6, notamment si le dépôt est effectué en plusieurs passes.

Le revêtement de tube 16 s'étend tout le long du tube 6, d'une extrémité du tube 6 à l'autre.

Dans exemple de réalisation préféré, le revêtement de tube 16 est continu. Il recouvre complètement la surface externe 6A du tube 6.

Chaque bouchon 8 comprend une partie d'insertion 18 insérée dans le tube 6 pour la fixation du bouchon 8 à l'extrémité correspondante du tube 6, et une partie exposée 20 restant à l'extérieur du tube 6 une fois le bouchon 8 fixé à l'extrémité correspondante du tube 6.

Chaque bouchon 8 présente un surface annulaire 22 venant en appui contre l'extrémité du tube 6 lorsque le bouchon 8 est disposé à l'extrémité du tube 6. La surface annulaire 22 est centré sur l'axe central A. La surface annulaire 22 se situe à la jonction entre la partie d'insertion 18 et la partie exposée 20. Comme illustré sur la Figure 2, la surface annulaire 22 est par exemple tronconique, en s'évasant de la partie d'insertion 18 vers la partie exposée 20.

Chaque bouchon 8 est par exemple réalisé dans un matériau à base de zirconium.

Dans un exemple de réalisation, le matériau à base de zirconium de chaque bouchon 8 est un alliage quaternaire de zirconium dont la composition comprend, en poids, de 0,8 à 1,8% de niobium, de 0,2 à 0,6% d'étain et de 0,02 à 0,4% de fer, le reste étant constitué de zirconium et des inévitables impuretés.

Dans un exemple de réalisation, le tube 6 et chaque bouchon 8 sont réalisés dans le même matériau.

Chaque bouchon 8 du crayon de combustible nucléaire 2 est muni d'un revêtement de bouchon 24. Le revêtement de bouchon 24 s'étend sur la partie exposée 20 du bouchon 8.

Dans un exemple de réalisation préféré, le revêtement de bouchon 24 est continu. Il recouvre par exemple complètement la partie exposée 20.

Le revêtement de bouchon 24 vient de préférence jusqu'au bord externe la surface annulaire 22.

Le revêtement de bouchon 24 est par exemple réalisé dans un matériau à base de chrome.

Dans un exemple de réalisation, le matériau à base de chrome du revêtement de bouchon 24 est un alliage à base de chrome choisi parmi : un alliage binaire chrome-aluminium, un alliage binaire chrome-azote et un alliage binaire chrome-titane.

Le revêtement de bouchon 24 de chaque bouchon 8 muni d'un revêtement de bouchon 24 est distinct du revêtement de tube 16.

Dans un exemple de réalisation, le revêtement de tube 16 et le revêtement de bouchon 24 de chaque bouchon 8 sont réalisés dans le même matériau.

Lorsqu'un bouchon 8 est muni d'un revêtement de bouchon 24, ce dernier est prévu de manière que le revêtement de tube 16 et le revêtement de bouchon 24 soient jointifs lorsque le bouchon 8 est disposé à l'extrémité du tube 6.

Plus particulièrement, le revêtement de bouchon 24 s'étend sur la partie exposée 20 de manière à être jointif avec le revêtement de tube 16 lorsque le bouchon 8 est disposé à l'extrémité du tube 6.

La partie d'insertion 18, et le cas échéant la surface annulaire 22, sont dépourvus de revêtement de bouchon 24. Le revêtement de bouchon 24 ne recouvre pas la partie d'insertion 18 et, le cas échéant, la surface annulaire 22.

De préférence, chaque bouchon 8 est fixé, et en particulier soudé sur le tube 6 sans présence d'un eutectique à la jonction entre le tube 6 et le bouchon 8, entre le matériau du tube 6, le matériau du revêtement de tube 16, le matériau du bouchon 8 et, le cas échéant, le matériau d'un revêtement de bouchon 24 recouvrant le bouchon 8.

En particulier, lorsque le tube 6 et/ou le bouchon 8 est(sont) réalisé(s) en un matériau à base de zirconium et que le revêtement de tube 16 et/ou un éventuel revêtement de bouchon 24 est(sont) réalisé(s) dans un matériau à base de chrome, le crayon de combustible nucléaire 2 est dépourvu d'eutectique chrome - zirconium (Cr-Zr) à la jonction entre le tube 6 et le bouchon 8.

La présence d'un eutectique à la jonction entre le tube 6 et le bouchon 8, en particulier un eutectique chrome - zirconium (Cr-Zr), serait susceptible de fragiliser le crayon de combustible nucléaire 2 et de diminuer sa résistance à l'oxydation, en particulier à haute température (typiquement à plus de 350°C).

Comme illustré sur les Figures 2 et 3, un procédé de fabrication du crayon de combustible nucléaire 2 comprend la fourniture du tube 6 revêtu de son revêtement de tube 16 et d'un bouchon 8 éventuellement revêtu d'un revêtement de bouchon 24 (Figure 2), puis la fixation du bouchon 8 à une extrémité du tube 6, la fixation étant réalisée par soudage par résistance électrique ou « soudage par résistance en bout » (Figure 3).

Pour la fixation par soudage par résistance du bouchon 8 sur le tube 6, le bouchon 8 est positionné à l'extrémité du tube 6, et un courant électrique est appliqué entre le tube 6 et le bouchon 8 de manière souder le bouchon 8 au tube 6. Lors du passage du courant électrique, le tube 6 et le bouchon 8 chauffent par effet Joule de sorte que leurs surfaces en contact se soudent entre elles sous l'effet conjoint d'un effort de soudage et de l'échauffement.

Plus particulièrement dans le cas présent, le bouchon 8 est disposé à l'extrémité du tube 6 de manière que sa surface annulaire 22 soit en appui axialement contre l'extrémité du tube 6, puis le courant électrique est appliqué (voir Figure 3).

Le soudage par résistance électrique est réalisé sans apport de matière.

De préférence, la fixation est réalisée par soudage par résistance électrique en bout, aussi connu en anglais sous le nom de « Resistance Butt Welding »

Pour la fixation par soudage par résistance électrique en bout de chaque bouchon 8 sur le tube 6, le bouchon 8 est positionné à l'extrémité du tube 6, le bouchon 8 et le tube 6 étant appliqué l'un contre l'autre avec une force de mise en pression déterminée (Flèches F sur le Figure 3), un courant électrique est appliqué entre le tube 6 et le bouchon 8 tout en maintenant la force de mise en pression, de manière à souder le bouchon 8 au tube 6.

Plus particulièrement dans le cas présent, le bouchon 8 est disposé à l'extrémité du tube 6 de manière à ce que sa surface annulaire 22 soit en appui axialement contre l'extrémité du tube 6 sous la force de mise en pression déterminée, celle-ci étant maintenue pendant l'application du courant électrique (voir Figure 3).

Comme illustré sur la Figure 3, le soudage par résistance électrique est réalisé par exemple à l'aide d'une machine de soudage 26 comprenant des organes de saisie 28, l'un prévu pour saisir un bouchon 8 et l'autre pour saisir le tube 6 à proximité de l'extrémité du tube 6 sur laquelle se fixe ledit bouchon 8, les organes de saisie 28 étant prévus pour appliquer le tube 6 et le bouchon 8 l'un contre l'autre, de préférence sous une force de mise en pression déterminée, la machine de soudage 26 comprenant une alimentation électrique 30 pour appliquer le courant entre le tube 6 et le bouchon 8 par l'intermédiaire des organes de saisie 28.

Le soudage par résistance électrique est réalisé en appliquant un courant continu, un courant alternatif ou un courant par impulsion. De préférence, le soudage par résistance est réalisé en appliquant un courant alternatif. L'utilisation d'un courant continu ou d'un courant par impulsion (obtenu par exemple par décharge de condensateurs) est tout aussi envisageable.

De préférence, le soudage par résistance électrique de chaque bouchon 8 est réalisé en appliquant un courant électrique présentant une intensité de courant comprise en 10 kA et 20 kA.

De préférence, le soudage par résistance électrique de chaque bouchon 8 est réalisé sous une force de mise en pression comprise entre 200 daN et 400 daN, de préférence comprise entre 250 daN et 350 daN.

De préférence, le soudage par résistance électrique de chaque bouchon 8 est réalisé en appliquant un courant électrique pendant une durée comprise entre 10 ms et 30 ms.

De préférence, le soudage par résistance électrique de chaque bouchon 8 est réalisé de manière que la température du tube 6 et du bouchon 8 à leur interface soit comprise entre 1300 °C et 1600 °C.

Avantageusement, le soudage par résistance électrique est réalisé de manière qu'à l'issue du soudage, le tube 6 et le bouchon 8 présentent un bourrelet de soudage dont les caractéristiques dimensionnelles sont maitrisées et contrôlées.

En d'autres termes, à l'issue du soudage, le tube 6 et le bouchon 8 possèdent une forme compatible avec les éléments de structure de l'assemblage de combustible.

Ceci est réalisé en contrôlant par exemple, le type de courant appliqué (courant continu, courant alternatif ou courant par impulsion), l'ampérage du courant, la durée d'application du courant et la force mise en pression utilisée pour mettre en pression le tube 6 et le bouchon 8 l'un contre l'autre, et éventuellement maintenue pendant l'application du courant électrique ainsi que les nature et géométrie des organes de saisie 28.

Les plages de valeurs indiquées ci-dessus, en particulier lorsqu'elles sont prises en combinaison, permettent de respecter la plage de température souhaitée et ainsi d'obtenir le soudage par résistance électrique.

La maitrise des dimensions du bourrelet de soudure le long du cordon de soudure évite d'avoir à effectuer une opération de reprise du cordon de soudure, en particulier par un procédé mécanique ou chimique avec enlèvement de matière, par exemple par ébavurage et polissage, et permet de préserver le revêtement de tube 16, et, le cas échéant, le revêtement de bouchon 24.

Ainsi, il est possible d'obtenir un crayon dont le tube 6 est muni d'un revêtement de tube 16 sur toute la longueur du tube 6, d'une extrémité à l'autre du tube 6. Le cas échéant, lorsque chaque bouchon 8 est lui-même muni d'un revêtement de bouchon 8, la gaine 4 dans son ensemble (i.e. le tube 6 et chaque bouchon 8) est ainsi revêtue et protégée efficacement de l'environnement extérieur.

En particulier, le revêtement de bouchon 24 de chaque bouchon 8 muni d'un revêtement de bouchon 24 et le revêtement de tube 16 sont jointifs à l'interface entre le tube 6 et le bouchon 8.

Dans un exemple de réalisation dans lequel le revêtement de tube 16 et le revêtement de bouchon 24 sont continus, et, après le soudage, le revêtement de bouchon 24 et le revêtement de tube 16 forment ensemble un revêtement continu, s'étendant continument sur le tube 6 et le bouchon 8, en particulier à l'interface entre le tube 6 et le bouchon 8.

Lorsque le revêtement de tube 16 est continu et que chaque bouchon 8 est muni d'un revêtement de bouchon 24 continu, le revêtement de tube 16 et les revêtements de bouchon 24 forment un revêtement de gaine recouvrant de manière continue la gaine 4, en s'étendant tout le long du tube 6 et sur les bouchons 8, avec une continuité du revêtement à l'interface entre le tube 6 et chaque bouchon 8.

Chaque bouchon 8 muni d'un revêtement de bouchon 24 est soudé sur le tube 6 sans affecter la forme de l'interface entre le tube 6 et le bouchon 8, et en option sans reprise de l'interface entre le tube 6 et le bouchon 8, en particulier par un procédé mécanique ou chimique avec enlèvement de matière.

En outre, le procédé de fabrication permet de fixer chaque bouchon 8 sur le tube 6 sans formation d'un eutectique à la jonction entre le tube 6 et le bouchon 8, entre le matériau du tube 6, le matériau du revêtement de tube 16, le matériau du bouchon 8 et, le cas échéant, le matériau d'un revêtement de bouchon 24 recouvrant le bouchon 8.

En particulier, lorsque le tube 6 et/ou le bouchon 8 est(sont) réalisé(s) en un matériau à base de zirconium et que le revêtement de tube 16 et/ou un éventuel revêtement de bouchon 24 est(sont) réalisé(s) dans un matériau à base de chrome, le crayon de combustible nucléaire 2 est dépourvu d'eutectique chrome - zirconium (Cr-Zr) à la jonction entre le tube 6 et le bouchon 8. De préférence, les deux bouchons 8 sont fixés sur le tube 6 comme indiqué ci-dessus pour former le crayon de combustible nucléaire 2.

Les fixations des bouchons 8, l'insertion du combustible nucléaire, ici sous forme de pastilles 10, et éventuellement l'insertion du ressort 12, sont effectuées séquentiellement.

Par exemples, un des bouchons 8 est fixé sur le tube 6, puis le combustible nucléaire et éventuellement le ressort 12 sont insérés dans le tube 6, puis l'autre bouchon 8 est fixé sur le tube 6.

De préférence, le bouchon 8 fixé en premier est le bouchon 8 situé du côté opposé au ressort 12. Ensuite, le combustible nucléaire puis le ressort 12 sont insérés dans le tube 6, puis l'autre bouchon 8 est fixé sur le tube 6.

En option, des éléments additionnels sont insérés dans le tube 6. Un élément additionnel pouvant être inséré dans le tube 6 est une cale tubulaire destinée à être située entre la colonne de pastilles 10 et le bouchon 8 situé à l'extrémité du tube 6 opposée à celle où se situe le ressort 12. Elle permet notamment de former un deuxième plenum à l'extrémité du crayon opposée au ressort 12.

En fonctionnement, le crayon de combustible nucléaire 2 inséré dans un assemblage de combustible nucléaire est orienté sensiblement verticalement dans le cœur du réacteur nucléaire.

Un parmi les bouchons 8, appelé bouchon 8 supérieur, est destiné à être situé en haut, l'autre parmi les bouchons 8, appelé bouchon 8 inférieur, étant destiné à être situé en bas.

Le bouchon 8 supérieur est celui qui est adjacent au ressort 12. Lorsqu'une cale tubulaire est prévue, elle est adjacente au bouchon 8 inférieur.

Comme visible sur la Figure 1, un ou chacun parmi les bouchons 8 comprend avantageusement un organe de saisie 32 destiné à pouvoir attraper le crayon de combustible nucléaire, par exemple pour l'extraire de l'assemblage de combustible nucléaire. Sur la Figure 1, chacun des bouchons 8 possède un tel organe de saisie 32.

Ainsi, de préférence, le procédé de fabrication comprend d'abord la fixation du bouchon 8 inférieur à une extrémité du tube 6, puis l'insertion du combustible nucléaire et du ressort 12 à l'intérieur du tube 6, puis la fixation du bouchon 8 supérieur sur l'autre extrémité du tube.

Au cours du procédé de fabrication, le tube 6 est muni du revêtement de tube 16 avant la fixation de chaque bouchon 8 sur le tube 6, et chaque bouchon 8 muni d'un revêtement de bouchon 24 est muni de ce revêtement de bouchon 24 avant sa fixation sur le tube 6.

Bien que chaque bouchon 8 soit ensuite soudé sur le tube 6, il est possible d'obtenir un revêtement continu du tube 6 et de chaque bouchon 8 revêtu d'un revêtement de bouchon 24, le revêtement de tube 16 et le revêtement de bouchon 24 étant jointifs.

Le procédé de fabrication comprend l'obtention du tube 6, par exemple par un procédé de laminage à pas de pèlerin.

Le procédé de fabrication comprend le dépôt du revêtement de tube 16 sur le tube 6, et le cas échéant le dépôt d'un revêtement de bouchon 24 sur chaque bouchon 8 muni d'un tel revêtement 8.

Le dépôt du revêtement de tube 16 et/ou chaque revêtement de bouchon 24 est effectué par exemple par dépôt physique en phase vapeur, en particulier par dépôt physique en phase vapeur par pulvérisation cathodique, encore plus en particulier par pulvérisation cathodique magnétron. Ceci permet d'obtenir un revêtement de tube 16 résistant.

Le dépôt physique en phase vapeur par pulvérisation cathodique magnétron du revêtement de tube 16 et/ou de chaque revêtement de bouchon 24 est réalisé par exemple selon une des techniques suivantes ou une combinaisons d'au moins deux parmi les techniques suivantes : pulvérisation cathodique magnétron en courant continu (en anglais « Direct Current » ou « DC »), pulvérisation cathodique magnétron en courant continu pulsé (en anglais « Pulsed Direct Current » ou « DC pulsed »), pulvérisation cathodique magnétron pulsée à haute puissance (en anglais « High Power Impulse Magnetron Sputtering» (HiPIMS ou HPPMS), pulvérisation cathodique magnétron bipolaire (en anglais « Magnetron Sputtering Bi-polar » (MSB)), pulvérisation cathodique dual magnétron (en anglais « Dual Magnetron Sputtering » (DMS)), pulvérisation cathodique magnétron déséquilibrée (en anglais "Unbalanced Magnetron Sputtering » (UBM)).

Le crayon de combustible nucléaire 2 n'est pas limité au mode de réalisation indiqué précédemment.

Dans le mode de réalisation des Figures 1 à 3, chaque bouchon 8 est muni d'un revêtement de bouchon 24 recouvrant la partie exposée 20 du bouchon 8.

En variante, un seul des deux bouchons 8 est muni d'un revêtement de bouchon 24. Dans ce dernier cas, il peut s'agir du bouchon 8 inférieur ou du bouchon 8 supérieur. Le bouchon 8 inférieur et le bouchon 8 supérieur ne sont pas soumis exactement aux mêmes contraintes thermiques, chimiques et neutroniques, de sorte qu'il peut être avantageux de revêtir un seul des deux bouchons 8.

Lorsqu'au moins un des bouchons 8 est dépourvu de revêtement (ou « non revêtu »), chaque bouchon 8 dépourvu de revêtement est fixé sur le tube 6, et en particulier soudé sur le tube 6, sans affecter la forme de l'interface entre le tube 6 et le bouchon 8, et en option sans reprise de l'interface entre le tube 6 et le bouchon 8, en particulier par un procédé mécanique ou chimique avec enlèvement de matière.

Dans le mode de réalisation des Figures 1 à 3, le combustible nucléaire est prévu sous la forme d'un empilement de pastilles 10 contenant du matériau fissile.

En variante, le combustible nucléaire est prévu sous une autre forme, par exemple sous forme de poudre.

## Revendications

1. Crayon de combustible nucléaire comprenant du combustible nucléaire contenu dans une gaine (4), la gaine (4) comprenant un tube (6) et deux bouchons (8), le tube (6) s'étendant suivant un axe central (A) et présentant deux extrémités, chaque bouchon (8) étant fixé à une extrémité respective du tube (6) en fermant cette extrémité de manière étanche, le tube (6) étant recouvert par un revêtement de tube (16), dans lequel le revêtement de tube (16) s'étend sur toute la longueur du tube (16), d'une extrémité du tube (6) à l'autre,
**caractérisé en ce qu'**un des bouchons (8) ou chaque bouchon (8) est recouvert au moins partiellement par un revêtement de bouchon (24), le revêtement de tube (16) et le revêtement de bouchon (24) sont réalisés dans le même matériau, chaque bouchon (8), revêtu ou non, est soudé sur le tube (6) sans affecter la forme de l'interface entre le tube (6) et le bouchon (8), et le revêtement de bouchon (24) de chaque bouchon (8) muni d'un revêtement de bouchon (24) et le revêtement de tube (16) sont jointifs à l'interface entre le tube (6) et le bouchon (8).

2. Crayon de combustible nucléaire selon la revendication 1, dans lequel chaque bouchon (8), revêtu ou non, est soudé sur le tube (6) sans reprise de l'interface entre le tube (6) et le bouchon (8), en particulier par un procédé mécanique ou chimique avec enlèvement de matière.

3. Crayon de combustible nucléaire selon la revendication 1 ou 2, dans lequel le tube (6) est réalisé dans un matériau à base de zirconium.

4. Crayon de combustible nucléaire selon l'une quelconque des revendications précédentes, dans lequel chaque bouchon (8) est réalisé dans un matériau à base de zirconium.

5. Crayon de combustible nucléaire selon l'une quelconque des revendications précédentes, dans lequel le revêtement de tube (16) est réalisé dans un matériau à base de chrome.

6. Crayon de combustible nucléaire selon l'une quelconque des revendications précédentes, dans lequel chaque bouchon est fixé sur le tube sans présence d'un eutectique à la jonction entre le tube et le bouchon entre le matériau du tube, le matériau du revêtement de tube, le matériau du bouchon et, le cas échéant, le matériau d'un revêtement de bouchon recouvrant le bouchon.

7. Procédé de fabrication d'un crayon de combustible nucléaire selon l'une quelconque des revendications précédentes, comprenant l'obtention du tube (6) et des bouchons (8), un des bouchons (8) ou chaque bouchon (8) étant revêtu d'un revêtement de bouchon (24), et le soudage d'au moins un des bouchons (8) ou de chaque bouchon (8) à l'extrémité correspondante du tube (6), par soudage par résistance électrique, sans affecter la forme de l'interface entre le tube (6) et le bouchon (8).

8. Procédé de fabrication selon la revendication 7, dans lequel chaque bouchon (8) est soudé sur le tube (6) par soudage par résistance électrique en bout.

9. Procédé de fabrication selon la revendication 7 ou la revendication 8, dans lequel le soudage par résistance électrique d'au moins un des bouchons (8) ou de chaque bouchon (8) est réalisé avec une intensité de courant comprise entre 10 kA et 20 kA.

10. Procédé de fabrication selon l'une quelconque des revendications 7 à 9, dans lequel le soudage par résistance électrique d'au moins un des bouchons (8) ou de chaque bouchon (8) est réalisé en appliquant le bouchon (8) contre l'extrémité correspondante du tube (6) sous une force de mise en pression comprise entre 200 daN et 400daN, de préférence comprise entre 250 daN et 350 daN.

11. Procédé de fabrication selon l'une quelconque des revendications 7 à 10, dans lequel le soudage par résistance électrique d'au moins un des bouchons (8) ou de chaque bouchon (8) est réalisé en appliquant un courant électrique pendant une durée comprise entre 10 ms et 30 ms.

12. Procédé de fabrication selon l'une quelconque des revendications 7 à 11, effectué sans reprise de l'interface entre le tube (6) et chaque bouchon (8) soudé sur le tube (6) par un procédé mécanique ou chimique avec enlèvement de matière.

13. Procédé de fabrication selon l'une quelconque des revendications 7 à 12, dans lequel chaque bouchon (8) est soudé sur le tube (6), sans formation d'un eutectique à la jonction entre le tube (6) et le bouchon (8), entre le matériau du tube (6), le matériau du revêtement de tube (16), le matériau du bouchon (8), et le cas échéant, le matériau d'un revêtement de bouchon (24) recouvrant le bouchon (8).

## Patentansprüche

1. Kernbrennstab, der Kernbrennstoff umfasst, der in einer Hülle (4) enthalten ist, wobei die Hülle (4) ein Rohr (6) und zwei Stopfen (8) umfasst, das Rohr (6) sich gemäß einer Mittelachse (A) erstreckt und zwei Enden aufweist, jeder Stopfen (8) an einem jeweiligen Ende des Rohrs (6) befestigt ist, indem er dieses Ende dicht verschließt, wobei das Rohr (6) mit einer Rohrbeschichtung (16) bedeckt ist, wobei sich die Rohrbeschichtung (16) über die gesamte Länge des Rohrs (16) von einem Ende des Rohrs (6) zum anderen erstreckt,
**dadurch gekennzeichnet, dass** einer der Stopfen (8) oder jeder Stopfen (8) zumindest teilweise mit einer Stopfenbeschichtung (24) bedeckt ist, die Rohrbeschichtung (16) und die Stopfenbeschichtung (24) aus demselben Material hergestellt sind, jeder Stopfen (8), beschichtet oder unbeschichtet, an das Rohr (6) geschweißt ist, ohne die Form der Grenzfläche zwischen dem Rohr (6) und dem Stopfen (8) zu beeinflussen, und die Stopfenbeschichtung (24) jedes Stopfens (8), der mit einer Stopfenbeschichtung (24) versehen ist, und die Rohrbeschichtung (16) an der Grenzfläche zwischen dem Rohr (6) und dem Stopfen (8) aneinander stoßen.

2. Kernbrennstab nach Anspruch 1, wobei jeder Stopfen (8), beschichtet oder unbeschichtet, ohne Nacharbeit der Grenzfläche zwischen dem Rohr (6) und dem Stopfen (8) an das Rohr (6) geschweißt ist, insbesondere durch ein mechanisches oder chemisches Verfahren mit Materialabtrag.

3. Kernbrennstab nach Anspruch 1 oder 2, wobei das Rohr (6) aus einem Material auf Zirkoniumbasis hergestellt ist.

4. Kernbrennstab nach einem der vorhergehenden Ansprüche, wobei jeder Stopfen (8) aus einem Material auf Zirkoniumbasis hergestellt ist.

5. Kernbrennstab nach einem der vorhergehenden Ansprüche, wobei die Rohrbeschichtung (16) aus einem Material auf Chrombasis hergestellt ist.

6. Kernbrennstab nach einem der vorhergehenden Ansprüche, wobei jeder Stopfen an dem Rohr befestigt ist, ohne dass ein Eutektikum an der Verbindungsstelle zwischen dem Rohr und dem Stopfen zwischen dem Material des Rohrs, dem Material der Rohrbeschichtung, dem Material des Stopfens und gegebenenfalls dem Material einer den Stopfen bedeckenden Stopfenbeschichtung vorhanden ist.

7. Verfahren zur Herstellung eines Kernbrennstabs nach einem der vorhergehenden Ansprüche, umfassend das Erhalten des Rohrs (6) und der Stopfen (8), wobei einer der Stopfen (8) oder jeder Stopfen (8) mit einer Stopfenbeschichtung (24) beschichtet ist, und das Verschweißen von mindestens einem der Stopfen (8) oder von jedem Stopfen (8) mit dem entsprechenden Ende des Rohrs (6) durch elektrisches Widerstandsschweißen, ohne die Form der Grenzfläche zwischen dem Rohr (6) und dem Stopfen (8) zu beeinflussen.

8. Herstellungsverfahren nach Anspruch 7, wobei jeder Stopfen (8) durch elektrisches Widerstandsstumpfschweißen an das Rohr (6) geschweißt wird.

9. Herstellungsverfahren nach Anspruch 7 oder Anspruch 8, wobei das elektrische Widerstandsschweißen von mindestens einem der Stopfen (8) oder von jedem Stopfen (8) mit einer Stromstärke zwischen 10 kA und 20 kA durchgeführt wird.

10. Herstellungsverfahren nach einem der Ansprüche 7 bis 9, wobei das elektrische Widerstandsschweißen von mindestens einem der Stopfen (8) oder von jedem Stopfen (8) durchgeführt wird, indem der Stopfen (8) mit einer Anpresskraft zwischen 200 daN und 400 daN, vorzugsweise zwischen 250 daN und 350 daN, gegen das entsprechende Ende des Rohrs (6) gedrückt wird.

11. Herstellungsverfahren nach einem der Ansprüche 7 bis 10, wobei das elektrische Widerstandsschweißen von mindestens einem der Stopfen (8) oder von jedem Stopfen (8) durch Anlegen eines elektrischen Stroms während einer Zeitdauer zwischen 10 ms und 30 ms durchgeführt wird.

12. Herstellungsverfahren nach einem der Ansprüche 7 bis 11, das ohne Nacharbeit der Grenzfläche zwischen dem Rohr (6) und jedem auf das Rohr (6) durch ein mechanisches oder chemisches Verfahren mit Materialabtrag geschweißten Stopfen (8) durchgeführt wird.

13. Herstellungsverfahren nach einem der Ansprüche 7 bis 12, wobei jeder Stopfen (8) an das Rohr (6) geschweißt wird, ohne dass ein Eutektikum an der Verbindungsstelle zwischen dem Rohr (6) und dem Stopfen (8) zwischen dem Material des Rohrs (6), dem Material der Rohrbeschichtung (16), dem Material des Stopfens (8) und gegebenenfalls dem Material einer den Stopfen (8) bedeckenden Stopfenbeschichtung (24) gebildet wird.

## Claims

1. A nuclear fuel rod comprising nuclear fuel contained in a cladding (4), the cladding (4) comprising a tube (6) and two plugs (8), the tube (6) extending along a central axis (A) and having two ends, each plug (8) being attached to a corresponding end of the tube (6) by sealing the end thereof, the tube (6) being covered by a tube coating (16), wherein the tube coating (16) extends over the entire length of the tube (16), from one end of the tube (6) to the other, **characterized in that** one of the plugs (8) or each plug (8) is at least partially covered by a plug coating (24), the tube coating (16) and the plug coating (24) are made of the same material, each plug (8), whether coated or uncoated, is welded onto the tube (6) without affecting the shape of the interface between the tube (6) and the plug (8), and the plug coating (24) of each plug (8) provided with a plug coating (24) and the tube coating (16) are contiguous at the interface between the tube (6) and the plug (8) .

2. The nuclear fuel rod according to claim 1, wherein each plug (8), whether coated or uncoated, is welded onto the tube (6) without reworking the interface between the tube (6) and the plug (8), in particular, by a mechanical or chemical process involving removal of material.

3. The nuclear fuel rod according to claim 1 or 2, wherein the tube (6) is made of a zirconium based material.

4. The nuclear fuel rod according to any one of the preceding claims, wherein each plug (8) is made of a zirconium based material.

5. The nuclear fuel rod according to any one of the preceding claims, wherein the tube coating (16) is made of a chromium based material.

6. The nuclear fuel rod according to any one of the preceding claims, wherein each plug is attached onto the tube without the presence of a eutectic at the junction between the tube and plug between the tube material, the tube coating material, the plug material and, where appropriate, the material of a plug coating covering the plug.

7. A manufacturing method for a nuclear fuel rod according to any one of the preceding claims, comprising the production of the tube (6) and of the plugs (8), one of the plugs (8) or each plug (8) being coated with a plug coating (24), and the welding by electric resistance welding of at least one of the plugs (8) or of each plug (8) to the corresponding end of the tube (6), without affecting the shape of the interface between the tube (6) and the plug (8).

8. The manufacturing method according to claim 7, wherein each plug (8) is welded onto the tube (6) by electric resistance butt welding.

9. The manufacturing method according to claim 7 or claim 8, wherein the electric resistance welding of at least one of the plugs (8) or of each plug (8) is carried out with a current comprised between 10 kA and 20 kA.

10. The manufacturing method according to any one of claims 7 to 9, wherein the welding by electric resistance of at least one of the plugs (8) or of each plug (8) is carried out by applying the plug (8) against the corresponding end of the tube (6) under a pressing force comprised between 200 daN and 400 daN, preferentially between 250 daN and 350 daN.

11. The manufacturing method according to any one of claims 7 to 10, wherein the electric resistance welding of at least one of the plugs (8) or of each plug (8) is carried out by applying an electric current for a length of time comprised between 10 ms and 30 ms.

12. The manufacturing method according to any one of claims 7 to 11, carried out without reworking the interface between the tube (6) and each plug (8) welded onto the tube (6) by a mechanical or chemical process involving removal of material.

13. The manufacturing method according to any one of claims 7 to 12, wherein each plug (8) is welded onto the tube (6), without forming a eutectic at the junction between the tube (6) and the plug (8), between the material of the tube (6), the material of the tube coating (16), the material of the plug (8), and, where appropriate, the material of a plug coating (24) covering the plug (8).
